# EUROPEAN PATENT APPLICATION

(11) **EP 1 032 221 A1**
(43) Date of publication of application: **30.08.2000**
(21) Application number: 00102892.7
(22) Date of filing: 12.02.2000
(51) Int. Cl.: H04N 9/31, G02B 7/00

(54) **Setting apparatus for an LCD projection television set**

(30) Priority: 24.02.1999 DE 19908044
(71) Applicant: DEUTSCHE THOMSON-BRANDT GMBH, 78048 Villingen-Schwenningen (DE)
(72) Inventor: Storz, Martin, 78048 Villingen-Schwenningen (DE)
(74) Representative: Rossmanith, Manfred, Dr.

(57) **Abstract**

The invention relates to a setting apparatus for an LCD projection television set. In such television sets, monochromatic beam pencils in the colours of red, green and blue are influenced by means of LCD light valves (19r,19b,19g), that is to say the light is or is not allowed to pass by the light valves depending on a video signal. The monochromatic television pictures which are generated in this way are superposed on a projection screen, where a colour picture is produced in this way.

For a television picture of good quality, therefore, it is absolutely necessary that the monochromatic beam pencils from the light valves are superposed exactly. This presupposes accurate adjustment of the light valves.

The invention proposes a setting apparatus by means of which particularly high setting accuracy can be obtained and, at the same time, the adjustment apparatus is simplified. For this purpose, the setting apparatus according to the invention is provided with a spring element (26) which applies a spring force to the setting means, thereby enabling setting without any play.

## Description

The invention relates to a setting apparatus, in particular for an LCD projection television set, according to the preamble of Claim 1.

In the case of a so-called LCD projection television set, the light emitted by a powerful light source is split in three illumination paths which are separate from one another and are each provided with a so-called light valve. Each of the light valves allows the light of one of the primary colours red, green and blue to pass, or blocks the passage of the light. The light that is allowed to pass by the light valves is projected onto a common projection screen, where superposition of the primary colours produces a colour picture. To ensure that a colour picture which is as true to life as possible is generated on the projection screen, it is necessary for the light valves to be highly accurately adjustable and then for the optimum setting position, once found, to be maintained. Setting apparatuses are provided for this purpose, such as are disclosed in EP-A 0 697 795, for example. The known setting apparatus can be set by means of eccentrics and adjusting screws.

The object of the present invention is to improve the setting accuracy of a setting apparatus of this type and to simplify the adjustment process.

This object is achieved by means of a setting apparatus according to Claim 1. The setting apparatus according to the invention has the advantage that the setting means, for which extremely high accuracy is a matter of importance, always work against the spring force of the spring element, with the result that the light valves acting as optical elements are adjusted without any play.

In one exemplary embodiment of the invention, the spring element is designed to be essentially planar. Spring means are bent away, or notched, proceeding from a planar base, with the result that, using few components, spring force can be applied to two optical elements or the retainers thereof in a plurality of setting directions. This simple construction enables savings to be made both in the production and in the assembly of the apparatus.

The mounting plates of the optical elements are advantageously designed in such a way that the latter can be set in any setting direction independently of the others.

In a particularly advantageous exemplary embodiment of the invention, the light valve is set by means of three vertical adjusting screws, which additionally make it possible to adjust the inclination of the optical element. This reduces the number of setting elements required.

In an expedient development of the invention, openings into which pins can be inserted are provided in the mounting plate and the base body. The mounting plates and hence the light valves are fixed by means of adhesive introduced in an interspace between the edge of the opening and the pins. This ensures that the adjustment, once found, is maintained throughout the service life of the projection set.

An exemplary embodiment of the invention is illustrated in the drawing, in which:
- Fig. 1: shows a detail of the illumination unit of an LCD projection television set,
- Fig. 2: shows the imaging unit of the LCD projection television set, and
- Fig. 3: shows a larger detail of the imaging unit from Fig. 2.

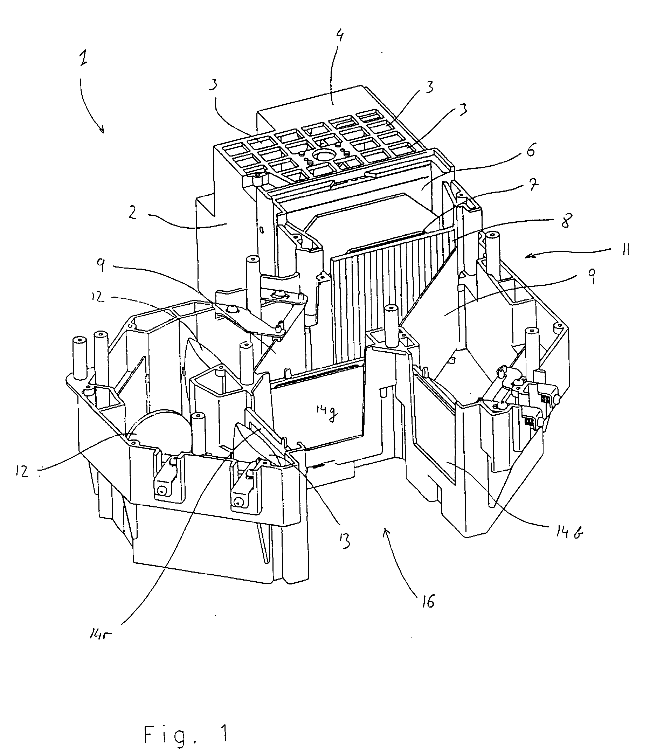

An illumination unit of an LCD back projection television set is shown in a perspective illustration in Fig. 1, the said illumination unit being designated as a whole by the reference symbol 1. The light source used for the illumination unit is a metal-halide lamp which is arranged in front of a parabolic reflector. A very bright parallel beam pencil is generated by this arrangement. Both the lamp and the reflector are built into a lamp housing 2 and are thus not visible in Fig. 1. The lamp housing is produced from metal in order to be resistant to the heat output by the lamp. Numerous perforations 3 in the bottom and in the cover 4 of the lamp housing provide for heat dissipation by convection. Undesirable infrared and ultraviolet spectral components are removed from the beam pencil emerging from the lamp housing 2 by means of an IR/UV filter 6. The beam pencil subsequently passes through an integrator plate 7 and a polarization conversion plate 8. The integrator plate 7 serves for generating a uniformly illuminated rectangular luminous spot whose dimensions approximately correspond to those of an LCD light valve. The polarization conversion plate 8 separates the light according to the latter's two directions of polarization and rotates one of the directions of polarization, with the result that essentially linearly polarized light, for example S-polarized light, emerges from the plate 8. In this case, fewer absorption losses are produced compared with a polarization filter.

The light pencil that has been treated in this way is decomposed into the colours red, green and blue by means of two semi-transparent two-colour filter mirrors 9a, 9b. The said optical elements 6, 7, 8 are retained in a housing 11 of the illumination unit 1. The lamp housing 2 is fixedly connected to the housing 11, which is produced from plastic because the thermal loading is not as high outside the lamp housing. The beam paths of the individual primary colours are spatially separated from one another in the housing 11 of the illumination unit 1, the beam paths of the colours green and blue having the same length, whereas the beam path of the colour red is longer. The integrator plate 7 generates the desired rectangular luminous spot only at a specific distance corresponding to the length of the beam path for the colours green and blue. Therefore, compensating lenses 12 are provided in the beam path for the colour red and compensate for the effect of the longer beam path on the luminous spot. Finally, imaging lenses 13 are provided in each beam path, which lenses focus the beam path of each colour onto the pupil of the projection lens (not illustrated in Fig. 1).

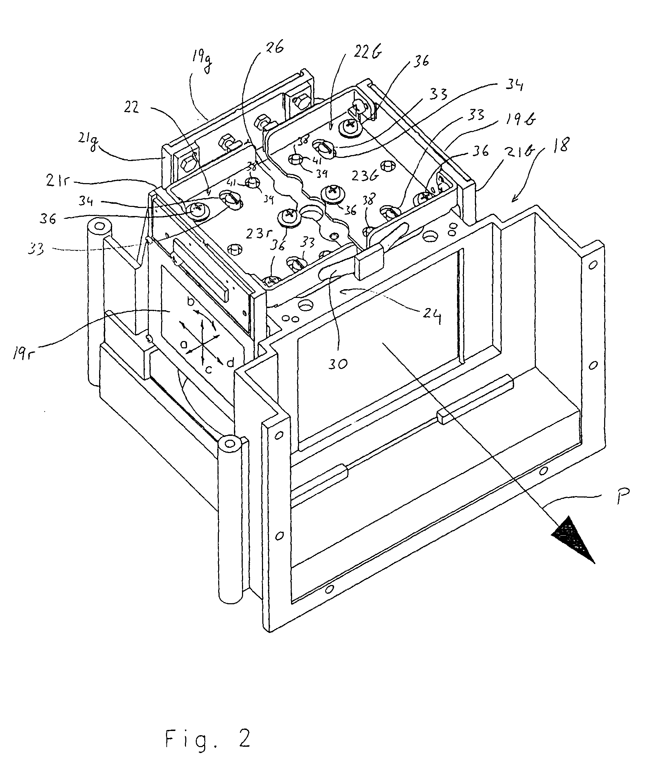

At the point where the beam pencils of the individual primary colours emerge from the housing 11 of the illumination unit 1, polarizers 14r, 14g and 14b are arranged in order to linearly polarize the light. The polarizers and the assigned parts of the housing 11 bound a receptacle 16 for an imaging unit 17, which is illustrated in Fig. 2.

Fig. 2 shows the imaging unit 17 in a perspective illustration in a plan view from above. The imaging unit has an essentially parallelepipedal, hollow base body 18, which is produced as a cast aluminium part. Receptacles for LCD light valves 19r, 19g and 19b, which are assigned to the primary colours red, green and blue, are provided on three side faces of the base body 18. A glass cube with internal, diagonal dichroic interfaces is arranged inside the base body and unites the monochromatic beam pencils again to form a single beam pencil which emerges from the fourth side face of the base body 18 and passes to a projection lens (not illustrated). The projection lens finally generates the image on the projection screen.

For the purpose of mechanical retention, each LCD light valve 19r, 19g, 19b is bonded into a frame 21r, 21g, 21b. The frame 21g for the light valve 19g for the colour green is fixedly connected to the base body 18, for example by being bonded thereto. By contrast, the frames 21r and 21b for the light valves 19r and 19b for the colours red and blue are fixedly connected to essentially U-shaped mounting plates 22r and 22b.

In order to generate a colour picture which is as far as possible undistorted and convergent on the projection screen of the television set, it is necessary for the light valves for the colours red and blue to be adjusted in a number of directions. These adjustment directions are represented by the arrows a, b, c and d in Fig. 2. In direction a, the focal plane is set, that is to say the distance from the projection lens. In direction b, the inclination of the horizontal lines is set in order that red and blue lines run parallel to green lines. In direction c, the vertical position of the first line is set, so that the first lines of all the primary colours are at the same vertical height. In direction d, the lateral position of the beginning of the line is set, so that all the lines of the primary colours begin at the same point. The setting apparatus according to the invention enables these settings to be performed particularly accurately.

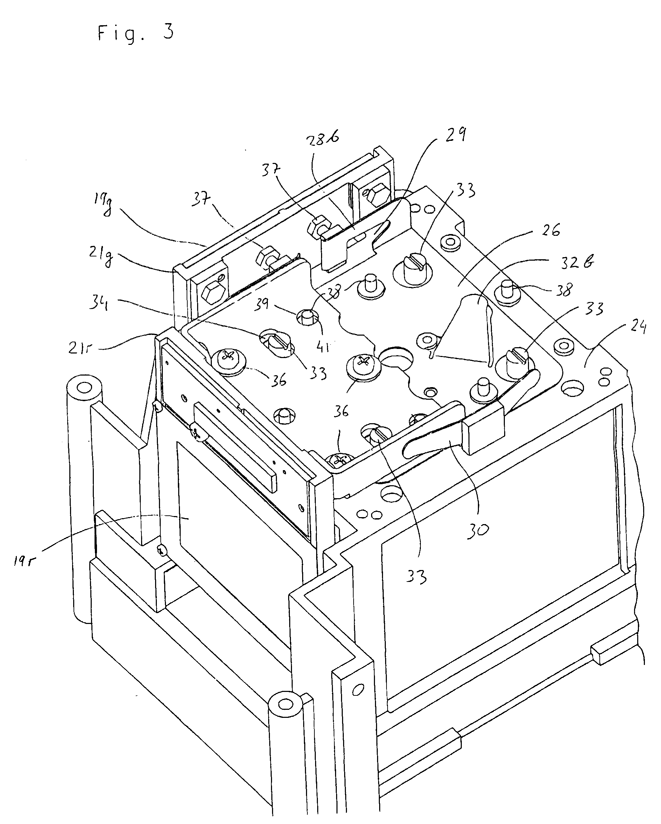

In order to explain the technical features which are required for this purpose in more detail, Fig. 3 illustrates a larger detail of the imaging unit 17 from Fig. 2, the light valve for the colour blue 19b and its assigned mounting plate 21b being omitted for the sake of clarity. Since the illumination unit 17 is constructed symmetrically with regard to the primary colours red and blue, all explanations below which are given for one beam path always apply to the respective other beam path as well. For the sake of brevity, therefore, the invention is explained predominantly with reference to those parts of the setting apparatus which are assigned to the colour red.

As is evident from Fig. 3, the mounting plate 22r has a base area 23r arranged at right angles to the plane of the LCD light valve 19r. When the LCD light valve 19r is mounted, the base area 23r of the mounting plate 22r lies essentially parallel to and above the cover area 24 of the base body 18 of the imaging unit 17. A spring element 26 is arranged between the cover area 24 and the mounting plate 22r.

The spring element 26 is designed to be essentially planar and comprises a base area 27. Two spring tabs 28r and 28b are bent away upwards on one side of the base area 27 and extend approximately across half of the lateral length of the base area 27. A cutout 29 is cut out from the spring tabs 28r and 28b in order to fix their spring force. The particular shape of the cutout 29 is only illustrated as an example; the cutout can have shapes that differ from this. A spring lug 30 is arranged opposite the spring tabs 28r, 28b. Like the spring tabs, the spring lug is bent away upwards at right angles with respect to the base area 27. The spring tab 28r and a tongue of the spring lug 30 act on the opposite limbs 31 of the U-shaped mounting plates 22r with spring forces that are directed oppositely to one another. Furthermore, two spring tongues are notched from the base area 27 of the spring element 26 and directed upwards, only the spring tongue 32b assigned to the light valve for the colour blue being visible in Fig. 3, while the spring tongue 32r which is assigned to the light valve for the colour red is concealed by the mounting plate 22r. The spring tongue 32r exerts a spring force that is directed upwards in Fig. 3 on the mounting plate 22r.

In order to hold the mounting plate 22r in a predetermined position counter to the spring forces acting on it, a plurality of setting means are provided. The setting of the focal plane in direction a is effected by means of two eccentric bolts 33, which project through slots 34 in the mounting plate 22r. The eccentric bolts 33 bear on the side faces of the slots 34 and determine, by their rotary position, the position of the mounting plate 22r in direction a. This arrangement allows the mounting plate 22r to be adjusted horizontally, vertically and in terms of its inclination, without an alteration of the position in direction a.

The setting of the mounting plate 22r in the vertical direction is effected by means of three adjusting screws 36, which are arranged in a triangular manner on the mounting plate 22r and project through the latter. The adjusting screws 36 are supported on the cover area 24 of the base body 18 and determine the distance between the mounting plate and the cover area 24, by all three adjusting screws 36 being actuated uniformly. Non-uniform actuation of the adjusting screws 36, on the other hand, enables the inclination of the light valve 19r to be set.

The adjustment in direction d of the mounting plate 22r is made possible by the adjusting screw 37, which acts against the spring forces of the spring tab 28r and of the spring lug 30. With the exception of the eccentric bolts 33, all of the adjusting screws always act against spring forces of the spring element 26, thereby enabling the mounting plate 22r to be adjusted without any play. A particular advantage of this arrangement is that a high degree of accuracy is achieved with respect to the setting. In this connection, therefore, the setting in direction a forms an exception, because the setting in this direction is the least critical owing to the relatively large depth of field of the projection lens. That becomes clear from a consideration of the setting accuracies required.

In direction a, the setting accuracy is e.g. ± 0.05 mm, whereas in directions c and d it is ± 22.50 µm, which corresponds approximately to half the extent of one pixel of the LCD light valve. Finally, the setting accuracy in direction b is approximately 0.06°. This high accuracy is achieved despite large setting ranges of ± 1.00 mm in directions a, c, and d and ± 1.00° in direction b.

If a hexagon-head or hexagon-socket screw is used for the adjusting screw 37, all the adjusting screws 36, 37 and the eccentric bolts 33 in Fig. 2 are accessible from above, which appreciably facilitates the adjustment process.

After the adjustment for the light valves for the colours red and blue has been concluded, the position thus found is fixed by pins 38, which are inserted into assigned openings in the cover area 24 of the base body 18. These openings are not visible in Fig. 3. Openings 39, through which the fixing pins 38 project, are provided in the mounting plate 22r, these openings 39 being dimensioned with a size such that, irrespective of the final setting position of the mounting plate 22r, the pins 38 will be found in their assigned openings in the cover area 24. An interspace 41 is formed between the pins 38 and the openings 39, adhesive being introduced into the said interspace in order to finally fix the position of the mounting plate 22r.

In an alternative exemplary embodiment, the fixing pins 38 are integrally formed in one piece on the base body 18, with the result that a work step can be omitted during the assembly of the imaging unit.

As mentioned further above, the statements relating to the adjustment of the light valve 19r and of the mounting plate 22r apply correspondingly to the light valve 19b and the mounting plate 22b, respectively.

## Claims

1. Setting apparatus in particular for a projection television set, having a base body (18) serving for retaining a number of optical elements (19r, 19g, 19b), at least one of the optical elements being rigidly connected to the base body (18), while the position of at least one of the other optical elements relative to the base body (18) can be set by setting means (33, 36, 37) **characterized** in that a spring element (26) is provided, which applies a spring force to all of the optical elements (19r, 19g, 19b) that can be set in at least one setting direction (b, c, d).

2. Setting apparatus according to Claim 1, **characterized** in that the spring element (26) is designed mirror-symmetrically, with the result that it exerts essentially identical spring forces on two optical elements (19r, 19b) that can be set.

3. Setting apparatus according to Claim 1, **characterized** in that the optical elements (19r, 19g, 19b) are retained in a frame (21) connected to a mounting plate (22r, 22g, 22b).

4. Setting apparatus according to Claim 1, **characterized** in that the spring element (26) has an essentially planar base (27) and spring elements (28r, 28b, 30) that are bent away.

5. Setting apparatus according to Claim 4, **characterized** in that a spring tongue (32r, 32b) is notched from the base (27) of the spring element (26).

6. Setting apparatus according to Claim 1, **characterized** in that three adjusting screws (36) are provided in order to set the vertical position of an optical element (19r, 19g, 19b), and in that the adjusting screws (36) additionally serve for setting the horizontal inclination of the optical element.

7. Setting apparatus according to Claim 6, **characterized** in that a spring force is applied to the adjusting screws (36) and to the adjusting means (37) for the lateral setting of the optical element by means of the spring element (26).

8. Setting apparatus according to Claim 1, **characterized** in that the mounting plate (22r, 22b), the base (27) of the spring element (26) and the cover surface (24) of the base body (18) are provided with fastening openings (39) for pins (38).

9. Setting apparatus according to Claim 1, **characterized** in that the pins (38) are integrally formed in one piece on the base body (18).

10. Setting apparatus according to Claim 6, **characterized** in that interspaces (41) are provided between the fastening openings (39) and the pins (38), which interspaces can be filled with adhesive.
